# EUROPÄISCHE PATENTSCHRIFT

(11) **EP 3 898 158 B1**
(45) Veröffentlichungstag und Bekanntmachung des Hinweises auf die Patenterteilung: **19.11.2025**
(21) Anmeldenummer: 19831656.4
(22) Anmeldetag: 17.12.2019
(51) Int. Cl.: B29B 13/08, B29C 48/14, B29C 48/92, B29C 59/14, B32B 38/00, C08J 3/28, B29B 7/84, B29B 7/60, B29B 7/66, B29B 7/72, B29B 9/16, B29B 13/00, B29B 13/02

(54) **VERFAHREN ZUM REDUZIEREN VON FLÜCHTIGEN SUBSTANZEN, BEI EINER KUNSTSTOFFAUFBEREITUNG, AUFBEREITUNGSVORRICHTUNG UND STEUERGERÄT**
METHOD FOR REDUCING VOLATILE SUBSTANCES IN A PLASTIC PREPARATION, TREATMENT DEVICE AND CONTROL UNIT
PROCÉDÉ POUR RÉDUIRE DES SUBSTANCES VOLATILES DANS UN TRAITEMENT PLASTIQUE, DISPOSITIF DE TRAITEMENT ET UNITÉ DE CONTRÔLE

(30) Priorität: 20.12.2018 DE 102018222499
(43) Veröffentlichungstag der Anmeldung: 27.10.2021
(73) Patentinhaber: Robert Bosch GmbH, 70442 Stuttgart (DE)
(72) Erfinder: HARBORD, Anika, 71093 Weil Im Schoenbuch (DE); APELT, Stefan, 70839 Gerlingen (DE)
(86) Internationale Anmeldenummer: PCT/EP2019/085607
(87) Internationale Veröffentlichungsnummer: WO 2020/127232

(56) Entgegenhaltungen:
- EP-A1- 3 263 302
- EP-A2- 0 127 149
- DE-A1- 102014 016 380
- DE-A1- 4 125 941
- JP-A- 2005 271 376
- JP-A- 2009 160 796
- JP-A- 2013 237 791
- JP-A- 2019 055 548
- US-A- 5 913 999

## Beschreibung

### Stand der Technik

Die Erfindung geht aus von einer Vorrichtung oder einem Verfahren nach Gattung der unabhängigen Ansprüche.

Ein Kunststoff kann beispielsweise mittels eines Extruders unter Beimischung von Hilfsstoffen aufbereitet werden.

### Offenbarung der Erfindung

Vor diesem Hintergrund werden mit dem hier vorgestellten Ansatz ein Verfahren zum Reduzieren von flüchtigen Substanzen, insbesondere von Gerüchen, bei einer Kunststoffaufbereitung, eine Aufbereitungsvorrichtung sowie ein Steuergerät, das dieses Verfahren verwendet, vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich. Gattungsgemäße Verfahren und Vorrichtungen sind in den Patentschriften EP3263302A1, JP2005271376A, DE102014016380A1, und JP2013237791A beschrieben.

Es wird ein Verfahren zum Reduzieren von flüchtigen Substanzen, insbesondere von Gerüchen, bei einer Kunststoffaufbereitung vorgestellt, wobei das Verfahren folgende Schritte umfasst:
Fördern eines Kunststoffs in eine Anregungszone einer
Aufbereitungsvorrichtung; und
Anregen eines Plasmas und/oder Applizieren von Ozon in der Anregungszone, um die flüchtigen Substanzen aus dem Kunststoff zu zersetzen.

Unter einem Kunststoff kann ein einzelner Kunststoff oder ein Gemisch aus verschiedenartigen Kunststoffen verstanden werden. Unter einem Kunststoff können ferner Kunststoffbestandteile, Kunststoffabfälle und/oder Kunststoffrezyklate verstanden werden. Unter einem Rezyklat kann ein wenigstens teilweise aufbereiteter Kunststoff oder Kunststoffbestandteil verstanden werden. Das Verfahren kann beispielsweise zum Compoundieren des Kunststoffs durchgeführt werden. Beispielsweise kann die Anregungszone in einer Fördereinrichtung zum Fördern des Kunststoffs angeordnet sein. Beispielsweise kann der Kunststoff bei, vor oder nach dem Fördern geschmolzen, homogenisiert, geknetet oder mit einem Druck beaufschlagt werden.

Gemäß einer Ausführungsform kann das Verfahren einen Schritt des Schmelzens des Kunststoffs umfassen. Der Schritt des Schmelzens kann beispielsweise ausgeführt werden, bevor der Kunststoff in die Aufbereitungsvorrichtung eingefüllt wird oder während sich der Kunststoff in der Aufbereitungsvorrichtung befindet, beispielsweise während des Förderns innerhalb der Aufbereitungsvorrichtung. Durch das Schmelzen des Kunststoffes können Eigenschaften des Kunststoffs verändert und verbessert werden.

Insbesondere kann der aufgeschmolzene Kunststoff mit Füll- und/oder Verstärkungsstoffen versehen werden, um gezielte Eigenschaftsmodifikationen vorzunehmen. Als Eigenschaftsmodifikationen können genannt werden: Festigkeit, Zähigkeit, Dehnung usw. Eine solche Eigenschaftsmodifikation erfolgt in der Regel auf physikalischen Weg. Gemäß dem hier beschriebenen Ansatz werden neben der bekannten Eigenschaftsmodifikation zusätzlich mittels chemischen Reaktionen die flüchtigen Substanzen, die dem Kunststoff bzw. seinen Bestandteilen entweichen und die den unangenehmen Geruch des aufbereiteten Kunststoffs verursachen, zersetzt.

Des Weiteren kann dadurch eine Adhäsion zwischen Kunststoff und zugegebenen Additiven oder eine intermolekulare Adhäsion im Kunststoff oder in einer Kunststoffmischung verbessert werden. Zudem wird eine Erzeugung von Nanofüllstoffen wie etwa Gleit-, Haft- oder Nukleierungsmittel oder einer Leitfähigkeit und optischer Eigenschaften in situ ermöglicht. Ein weiterer Vorteil eines derartigen Verfahrens zur plasmainitiierten, reaktiven Compoundierung besteht beispielsweise auch in der Möglichkeit, Vernetzungsreaktionen oder Polymerisationsreaktionen durch einen UV-Anteil im Plasma hervorzurufen.

Gemäß einer Ausführungsform kann das Verfahren einen Schritt des Hinzufügens eines Hilfsstoffs aufweisen. Bei dem Hilfsstoff kann es sich beispielsweise um einen festen, flüssigen oder gasförmigen Präkursor oder um ein Hilfsgas handeln. Unter einem Präkursor kann ein schichtbildender oder nicht schichtbildender Ausgangsstoff bei einer chemischen Gasphasenabscheidung verstanden werden. Der Hilfsstoff kann beispielsweise Sauerstoff, Stickstoff, Argon und/oder Xenon enthalten. Weiterhin kann der Hilfsstoff Hexamethyldisiloxan (HMDSO) enthalten.

Des Weiteren kann im Schritt des Hinzufügens des Hilfsstoffs ein Gas oder Gasgemisch als der Hilfsstoff hinzugefügt werden. Dadurch kann das Ausgasen des Hilfsstoffes begünstigt werden.

Gemäß einer weiteren Ausführungsform kann im Schritt des Hinzufügens der Hilfsstoff vor und/oder während des Förderns zu dem Kunststoff hinzugefügt werden. Dadurch kann der Kunststoff in einem Schritt gefördert und mit dem Hilfsstoff vermischt werden. Somit kann die Aufbereitung des Kunststoffs beschleunigt werden.

Es ist vorteilhaft, wenn im Schritt des Schmelzens der Hilfsstoff während des Schmelzens hinzugefügt wird. Dadurch kann eine gleichmäßige Vermischung des Hilfsstoffes mit dem Kunststoff sichergestellt werden.

Gemäß einer Ausführungsform kann im Schritt des Anregens der Kunststoff und/oder der Hilfsstoff zur Plasmabildung angeregt werden. Dadurch kann die Aufbereitung des Kunststoffes verbessert werden. Bei der Aufbereitung des Kunststoffs, auch Compoundierung genannt, kann durch Beimischung zumindest eines Zuschlagstoffes, beispielsweise des Hilfsstoffes ein Eigenschaftsprofil des Kunststoffes geändert werden.

Der Hilfsstoff kann im Schritt des Anregens als ausgegaster Hilfsstoff angeregt werden. Durch das Ausgasen des Hilfsstoffes kann der Hilfsstoff sehr einfach angeregt werden. Zusätzlich oder alternativ kann der Hilfsstoff als flüssiger Hilfsstoff angeregt werden. Dies bietet sich beispielsweise an, wenn kein Niederdruck zum Ausgasen des Hilfsstoffes erzeugt wird. Zusätzlich oder alternativ kann der Hilfsstoff als mit dem Kunststoff vermischter Hilfsstoff angeregt werden. Dadurch kann die Aufbereitungsvorrichtung sehr einfach realisiert werden, da kein Herauslösen des Hilfsstoffes aus dem Kunststoff erforderlich ist.

Gemäß einer weiteren Ausführungsform kann im Schritt des Anregens des Plasmas durch das Plasma Ozon gebildet werden. Hierdurch wirkt das durch das Plasma erzeugte Ozon im Wesentlichen am gleichen Ort wie das Plasma, wodurch sich die Wirkung des Plasmas vorteilhaft verstärkt. Durch die parallele Wirkung des Plasmas und des Ozons verändern die für den Geruch des Kunststoffs verantwortlichen flüchtigen Substanzen ihre chemische Zusammensetzung derart, dass sie für einen Menschen nicht oder kaum mehr wahrnehmbar sind.

Gemäß einer weiteren Ausführungsform kann im Schritt des Applizierens von Ozon das Ozon durch eine externe Einheit, insbesondere durch einen Ozongenerator, zugeführt werden. Denn hierdurch kann eine Menge des die flüchtigen Substanzen zersetzenden Ozons gezielt eingestellt werden. Dies eignet sich besonders für Kunststoffe mit einem hohen Rezyklatanteil, welche eine hohe Konzentration an flüchtigen Substanzen aufweisen.

Gemäß einer Ausführungsform ist die Anregungszone ausgeformt, um ein Ausgasen zumindest eines Hilfsstoffes aus dem Kunststoff zu ermöglichen. Unter Ausgasen kann ein selbstständiges Entweichen von Gasen aus dem Kunststoff verstanden werden. Bei dem Ausgasen kann es sich auch um eine gesteuerte Entfernung von Gasen aus dem Kunststoff handeln, was auch als Entgasen bezeichnet werden kann. In diesem Fall kann die Anregungszone als eine Niederdruckzone ausgeführt sein. Unter einer Niederdruckzone kann ein Bereich der Aufbereitungsvorrichtung verstanden werden, der einen im Vergleich zu einem Umgebungsdruck der Aufbereitungsvorrichtung geringeren Druck aufweist. Alternativ kann in der Anregungszone der Umgebungsdruck, auch atmosphärischer Druck genannt, herrschen. Bei der Anregungszone handelt es sich gemäß einer Ausführungsform um eine konventionelle Öffnung im Zylinder der Aufbereitungsvorrichtung, auch Compounder genannt.

Somit kann der Kunststoff und/oder der Hilfsstoff gemäß unterschiedlichen Ausführungsformen in der Anregungszone einem Niederdruck oder einem atmosphärischen Druck ausgesetzt werden. Auch kann der Kunststoff und/oder der Hilfsstoff einem Überdruck ausgesetzt werden. Beispielsweise kann der Druck innerhalb der Anregungszone so eingestellt werden, dass der Hilfsstoff optimal angeregt werden kann.

Es ist weiterhin von Vorteil, wenn im Schritt des Anregens des Plasmas und/oder des Applizierens des Ozons das Plasma und/oder das Ozon auf einer Oberfläche des Kunststoffs einwirkt, um die aus dem Kunststoff austretenden flüchtigen Substanzen zu zersetzen. Der Kunststoff kann hierbei sowohl in fester als auch flüssiger Form bzw. aufgeschmolzen vorliegen. Denn hierdurch werden die flüchtigen Substanzen direkt nach ihrem Austreten aus dem Kunststoff bzw. der Kunststoffschmelze dem Plasma und/oder dem Ozon ausgesetzt und somit effektiv und effizient zersetzt.

Gemäß einer Ausführungsform kann vorgesehen sein, dass das Plasma und/oder Ozon großflächig und/oder lokal an verschiedenen Stellen auf der Oberfläche des Kunststoffs angeregt und/oder appliziert wird. Dies kann beispielsweise über eine Mehrzahl an Düsen erfolgen, über welche das Plasma und/oder das Ozon auf die Oberfläche des Kunststoffs geführt bzw. geleitet wird. Die Düsen können hierbei an Öffnungen entlang der Aufbereitungsvorrichtung angeordnet sein. Die Düsen können sowohl im Unterdruck als auch bei Umgebungsdruck betrieben werden. Hierdurch werden die flüchtigen Substanzen besonders effizient zersetzt.

Von Vorteil ist auch, wenn im Schritt des Hinzufügens zumindest ein weiterer Hilfsstoff zu dem Kunststoff hinzugefügt wird. Im Schritt des Förderns kann der Kunststoff in die Anregungszone gefördert werden. Dabei kann gemäß einer Ausführungsform ein Ausgasen des weiteren Hilfsstoffes aus dem Kunststoff ermöglicht werden. Im Schritt des Anregens kann der weitere Hilfsstoff in der Anregungszone angeregt werden, um das Plasma und, zusätzlich oder alternativ, ein weiteres Plasma zum Aufbereiten des Kunststoffs zu bilden. Bei dem weiteren Hilfsstoff kann es sich um einen Stoff mit von dem Hilfsstoff abweichenden Eigenschaften handeln. Entsprechend kann das weitere Plasma von dem Plasma abweichende Eigenschaften aufweisen. Durch diese Ausführungsform wird eine umfassende Beeinflussung und Optimierung des Kunststoffs mithilfe unterschiedlicher Hilfsstoffe ermöglicht.

Das Verfahren kann optional einen Schritt des Zugebens umfassen, in welchem dem Kunststoff zumindest ein Zusatzstoff zugegeben wird. Hierbei kann der Zusatzstoff vor dem Hinzufügen und/oder während des Anregens zugegeben werden. Unter einem Zusatzstoff kann ähnlich dem Hilfsstoff ein Stoff zum Beeinflussen von Eigenschaften des Kunststoffs verstanden werden. Der Zusatzstoff kann andere Eigenschaften als der Hilfsstoff aufweisen. Dadurch können die Eigenschaften des Kunststoffs weiter verbessert werden.

Gemäß einer weiteren Ausführungsform kann das Verfahren einen Schritt des Entfernens von beim Anregen entstehenden Abgasen umfassen. Durch diese Ausführungsform kann eine Verunreinigung des Kunststoffs beim Anregen verhindert werden.

Dieses Verfahren kann beispielsweise in Software oder Hardware oder in einer Mischform aus Software und Hardware, beispielsweise in einem Steuergerät, implementiert sein.

Der hier beschriebene Ansatz schafft zudem eine Aufbereitungsvorrichtung zum Reduzieren von flüchtigen Substanzen, insbesondere von Gerüchen, bei einer Kunststoffaufbereitung, wobei die Aufbereitungsvorrichtung folgende Merkmale aufweist:
eine Anregungszone;
eine Fördereinrichtung, die ausgebildet ist, um ein Gemisch aus einem Hilfsstoff und dem Kunststoff in die Anregungszone zu fördern; und
eine Anregungseinrichtung, die ausgebildet ist, um in der Anregungszone (108) ein Plasma (112) anzuregen und/oder Ozon zu applizieren, um die flüchtigen Substanzen aus dem Kunststoff (104) zu zersetzen.

Bei der Aufbereitungsvorrichtung kann es sich beispielsweise um einen Extruder mit einem Schneckenförderer als Fördereinrichtung handeln. Hierbei kann die Anregungszone im Bereich der Fördereinrichtung angeordnet sein. Bei der Anregungseinrichtung kann es sich beispielsweise um eine Strahlenquelle zum Bestrahlen einer Oberfläche des Kunststoffs mit elektromagnetischer Strahlung, beispielsweise mit einem Laserstrahl, handeln. Die Anregungseinrichtung kann zumindest teilweise im Bereich der Anregungszone angeordnet sein.

Gemäß einer Ausführungsform kann die Fördereinrichtung als Schneckenförderer ausgeführt sein. Zusätzlich oder alternativ kann die Fördereinrichtung als Komponente eines Extruders ausgeführt sein. Beispielsweise kann die Fördereinrichtung ausgebildet sein, um den Kunststoff zu einer Austrittsöffnung des Extruders zu fördern. Durch diese Ausführungsform wird eine effiziente Förderung und Aufbereitung des Kunststoffs ermöglicht.

Gemäß einer weiteren Ausführungsform kann die Anregungseinrichtung eine Ozonapplikationseinheit aufweist, welche mit einer Ozonquelle, insbesondere mit einem Ozongenerator, verbunden ist. Denn hierdurch kann eine Menge des die flüchtigen Substanzen zersetzenden Ozons gezielt eingestellt und dem Kunststoff zugeführt werden. Dies eignet sich besonders für Kunststoffe mit einem hohen Rezyklatanteil, welche eine hohe Konzentration an flüchtigen Substanzen aufweisen.

Gemäß einer weiteren Ausführungsform kann die Anregungseinrichtung eine Mehrzahl an Düsen aufweisen, mit welchen das Plasma auf einer Oberfläche des Kunststoffs anregbar und/oder das Ozon auf einer Oberfläche des Kunststoffs applizierbar ist, wobei die Mehrzahl an Düsen derart an der Anregungseinrichtung angeordnet sind, dass das Plasma und/oder das Ozon großflächig und/oder lokal an verschiedenen Stellen auf der Oberfläche des Kunststoffs einwirkt, um die aus dem Kunststoff austretenden flüchtigen Substanzen zu zersetzen. Hierdurch werden die flüchtigen Substanzen besonders effizient zersetzt.

Gemäß einer weiteren Ausführungsform kann die Anregungszone ausgebildet sein, um den Kunststoff mit einem Druck von maximal 1 bar zu beaufschlagen. Dadurch wird ein effizientes Ausgasen des Hilfsstoffes ermöglicht.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrundeliegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ausführungsbeispiele der Erfindung sind in den Zeichnungen dargestellt und in der nachfolgenden Beschreibung näher erläutert. Es zeigt:
Fig. 1 eine schematische Darstellung einer Aufbereitungsvorrichtung gemäß einem Ausführungsbeispiel;
Fig. 2 eine schematische Darstellung eines Steuergeräts gemäß einem Ausführungsbeispiel; und
Fig. 3 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

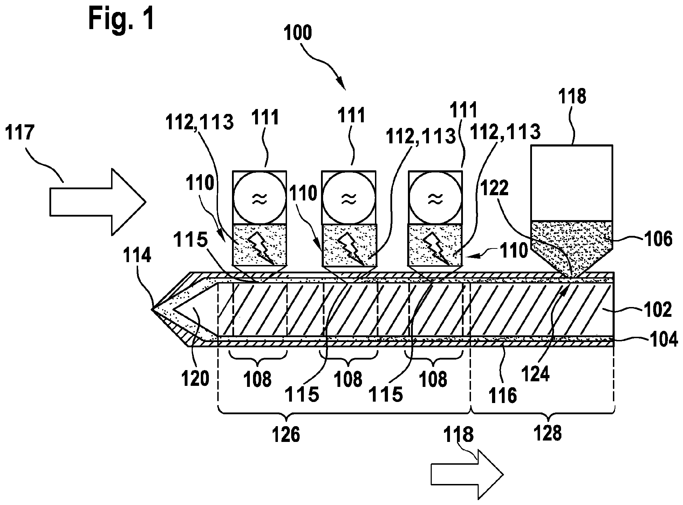

Fig. 1 zeigt eine schematische Darstellung einer Aufbereitungsvorrichtung 100 gemäß einem Ausführungsbeispiel. Die Aufbereitungsvorrichtung 100 umfasst eine Fördereinrichtung 102, hier einen Schneckenförderer, zum Fördern eines Kunststoffs 104. Die Fördereinrichtung 102 ist ausgebildet, um den Kunststoff 104 in eine Anregungszone 108 der Aufbereitungsvorrichtung 100 zu fördern.

Eine oder eine Mehrzahl an an der Anregungseinrichtung 110, insbesondere in einer Anregungszone 108, angeordnete/n Plasmaquelle/n 111 und/oder Ozonquelle/n 113 ist/sind ausgebildet, um die aus dem Kunststoff 104 austretenden flüchtigen Substanzen zu zersetzen. Gemäß diesem Ausführungsbeispiel sind drei Plasmaquellen 111 und/oder Ozonquellen 113 mit jeweils einer Anregungszone 108 vorgesehen. Die Plasmaquellen 111 können hierbei durch eine externe Gasversorgung beispielsweise mit Sauerstoff, Stickstoff, Argon, Xenon und/oder Hexamethyldisiloxan (HMDSO) gespeist werden, um ein Plasma 112 zu erzeugen. Die Ozonquellen 113 können hierbei durch einen, insbesondere externen, Ozongenerator gespeist werden. Weiterhin können die Plasmaquellen 111 ausgebildet sein, um bei der Plasmabildung auch Ozon zu bilden. Durch das Plasma 112, durch das von den Plasmaquellen 111 gebildete Ozon und/oder durch das Ozon aus den Ozonquellen 113 werden aus dem Kunststoff 104 austretende, für den Geruch der aus dem Kunststoff 104 hergestellten Produkte verantwortliche, flüchtige Substanzen zersetzt.

Gemäß einer weiteren Ausführungsform kann die Anregungseinrichtung 110 eine Mehrzahl an Düsen 115 aufweisen, mit welchen das Plasma 112 auf einer Oberfläche des Kunststoffs 104 anregbar und/oder das Ozon 113 auf einer Oberfläche des Kunststoffs 104 applizierbar ist, wobei die Mehrzahl an Düsen 115 derart an der Anregungseinrichtung 110 angeordnet sind, dass das Plasma 112 und/oder das Ozon 113 großflächig und/oder lokal an verschiedenen Stellen auf der Oberfläche des Kunststoffs 104 einwirkt

In einer weiteren Ausführungsform kann der Kunststoff 104 mit einem Hilfsstoff 106 versetzt werden, der beispielsweise Sauerstoff, Stickstoff, Argon und/oder Xenon enthält. Weiterhin kann der Hilfsstoff 106 Hexamethyldisiloxan (HMDSO) enthalten. Bei Beaufschlagung des Kunststoffs 104 mit einem bestimmten Druck kann der Hilfsstoff 106 aus dem Kunststoff ausgasen. Die Fördereinrichtung 102 ist ausgebildet, um das Gemisch aus dem Kunststoff 104 und dem Hilfsstoff 106 in drei gemäß diesem Ausführungsbeispiel als Niederdruckzonen 108 ausgeführte Anregungszonen der Aufbereitungsvorrichtung 100 zu fördern, in denen ein Druck herrscht, der niedriger als ein Umgebungsdruck der Aufbereitungsvorrichtung 100, genauer der Fördereinrichtung 102, ist. Durch den in den Niederdruckzonen 108 herrschenden Unterdruck kommt es zum Ausgasen des Hilfsstoffes 106 aus dem Kunststoff 104. Eine hier angrenzend an die Niederdruckzonen 108 angeordnete Anregungseinrichtung 110 mit jeweils einer Plasmaquelle 111 und/oder einer Ozonquelle 113 ist ausgebildet, um den aus dem Kunststoff 104 ausgasenden Hilfsstoff 106 in einer aktiven Plasmazone zu einem Plasma 112 anzuregen und/oder um Ozon auf den Kunststoff 104 zu applizieren. Durch das Plasma 112 und/oder das Ozon werden die flüchtigen Substanzen aus dem Kunststoff 104 gezielt zersetzt. Ferner können durch das Plasma 112 Eigenschaften des Kunststoffs 104 gezielt geändert und verbessert werden.

Gemäß diesen Ausführungsbeispielen ist die Aufbereitungsvorrichtung 100 als Extruder mit einer Austrittsöffnung 114 ausgeführt. Die Fördereinrichtung 102 ist drehbar in einem Gehäuse 116 des Extruders angeordnet und ausgebildet, um den Kunststoff 104 von einer Zugabeeinrichtung 118 über die Niederdruckzone 108 zur Austrittsöffnung 114 zu fördern. Über die Zugabeeinrichtung 118 können der Hilfsstoff 106, Kunststoffabfälle und/oder Rezyklate dem Kunststoff 104 beigemischt werden.

Gemäß Fig. 1 weist das Gehäuse 116 im Bereich der Austrittsöffnung 114 einen sich in Richtung der Austrittsöffnung 114 verjüngenden Querschnitt auf, sodass sich eine in Förderrichtung spitz zulaufende Form des Gehäuses 116 ergibt. Die Fördereinrichtung 102 ist an einem der Austrittsöffnung 114 zugewandten Ende mit einer Spitze 120 ausgeformt, deren Kontur im Wesentlichen einer Kontur des sich verjüngenden Querschnitts des Gehäuses 116 entspricht. Die Zugabeeinrichtung 118 ist als Materialbehälter, etwa als Drucktopf, mit einer Auslauföffnung 122 realisiert. Das Gehäuse 116 weist eine Gehäuseöffnung 124 auf, die der Auslauföffnung 122 gegenüberliegend angeordnet ist. Der Hilfsstoff 106, die Kunststoffabfälle und/oder die Rezyklate können somit durch die Auslauföffnung 122 und die Gehäuseöffnung 124 auf die Fördereinrichtung 102 gelangen. Die Niederdruckzone 108 ist zwischen der Austrittsöffnung 114 und der Gehäuseöffnung 124 angeordnet.

Die Fördereinrichtung 102 kann optional mit einem ersten Gewindeabschnitt 126 und einen an den ersten Gewindeabschnitt 126 angrenzenden zweiten Gewindeabschnitt 128 realisiert sein, wobei sich eine Steigung des ersten Gewindeabschnitts 126 von einer Steigung des zweiten Gewindeabschnitts 128 unterscheidet. Die Fördereinrichtung 102 ist gemäß dieser Ausführungsform derart im Gehäuse 116 platziert, dass der erste Gewindeabschnitt 126 zumindest teilweise in den Niederdruckzonen 108 liegt und sich der zweite Gewindeabschnitt 128 ausgehend vom ersten Gewindeabschnitt 126 zumindest bis zur Gehäuseöffnung 124 erstreckt. Gemäß diesem Ausführungsbeispiel weist der erste Gewindeabschnitt 126 eine geringere Steigung als der zweite Gewindeabschnitt 128 auf.

Optional dient die Zugabeeinrichtung 118 zum Zugeben von von dem Hilfsstoff abweichenden Zusatzstoffen wie Additiven, Polymeren oder Präkursoren.

Beim Anregen können optional Additive, Präkursoren oder Hilfsgase zugegeben werden. Dies ist durch einen Pfeil 117 gekennzeichnet. Abgase, die beim Anregen entstehen, können optional entfernt werden, beispielsweise durch Absaugung. Dies ist durch einen weiteren Pfeil 118 gekennzeichnet.

Zur Einstellung eines Eigenschaftsprofils des Kunststoffs 104 kann der Kunststoff 104 je nach Ausführungsbeispiel mit Additiven, Füll-, Zuschlags- oder Verstärkungsstoffen vermischt werden. Dies kann in einem Compoundierprozess mittels eines Extruders oder Compounders, etwa einem Ein- oder Doppelschneckenextruder, oder mittels eines Kneters als Fördereinrichtung 102 erfolgen. Bei der Compoundierung können mechanische Eigenschaften eines Grundpolymers des Kunststoffs 104 durch Zugeben von Verstärkungs- und Füllstoffen oder durch eine Schlagzähmodifizierung zur Einstellung mechanischer Kenngrößen wie Zugfestigkeit, Bruchdehnung und Schlagzähigkeit verändert werden. Des Weiteren können bei der Compoundierung Farbeinstellungen verändert werden, Stabilisatoren und Stabilisatorsysteme zur Vermeidung eines temperaturinitiierten Kettenabbaus während der Verarbeitung oder in der Anwendung und zur Verbesserung der Witterungsbeständigkeit oder Verarbeitungshilfsstoffe zugegeben werden. Bei der Compoundierung kann der Kunststoff 104 ferner mit einem Flammschutz versehen werden.

Durch die Wahl einer Schneckengeometrie der Fördereinrichtung 102 kann im Compoundierprozess die zur Entgasung einer Schmelze des Kunststoffs 104 nutzbare Niederdruckzone 108 geschaffen werden.

Gemäß einem weiteren Ausführungsbeispiel weist die Aufbereitungsvorrichtung 100 eine Anregungszone 108 auf, in der der atmosphärische Druck herrscht.

Unabhängig von dem in der Anregungszone 108 während des Betriebs der Aufbereitungsvorrichtung 100 herrschenden Drucks kann der Hilfsstoff 106 zum Anregen in der Anregungszone 108 zumindest teilweise aus dem Kunststoff 104 herausgelöst werden. Dabei kann der Hilfsstoff 106 in ausgegaster Form oder in flüssiger Form vorliegen und angeregt werden. Gemäß einem Ausführungsbeispiel wird der Hilfsstoff 106 in der Anregungszone 108 angeregt, während der Hilfsstoff 106 noch mit dem Kunststoff 104 vermischt ist. Gemäß einem Ausführungsbeispiel wird in der Anregungszone 108 nicht nur der Kunststoff 104, sondern zusätzlich auch der Hilfsstoff 106 angeregt.

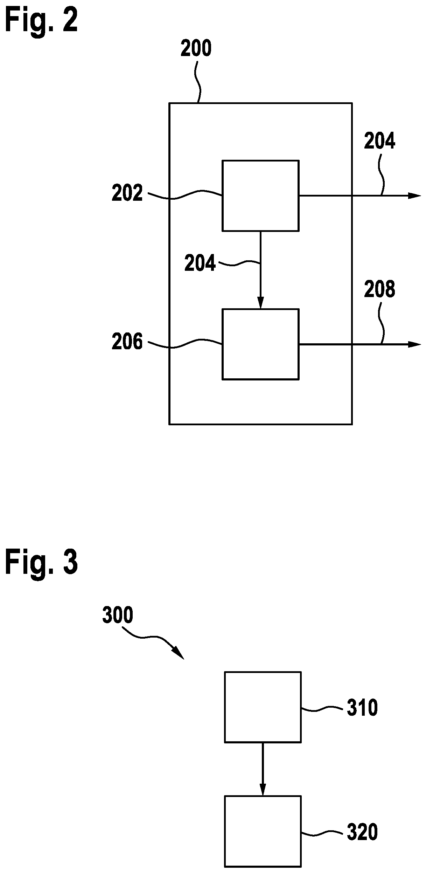

Fig. 2 zeigt eine schematische Darstellung eines Steuergeräts 200 gemäß einem Ausführungsbeispiel. Das Steuergerät 200 kann ausgebildet sein, um eine vorangehend anhand von Fig. 1 beschriebene Aufbereitungsvorrichtung anzusteuern. Das Steuergerät 200 umfasst eine Fördersteuereinheit 202, die ausgebildet ist, um ein Fördersteuersignal 204 zum Ansteuern der Fördereinrichtung der Aufbereitungsvorrichtung zu erzeugen, wobei die Fördereinrichtung ausgebildet ist, um den Kunststoff unter Verwendung des Fördersteuersignals 204 in die Anregungszone zu fördern. Des Weiteren umfasst das Steuergerät 200 eine Anregungssteuereinheit 206, die ausgebildet ist, um unter Verwendung des Fördersteuersignals 204 ein Anregungssteuersignal 208 zum Ansteuern der Anregungseinrichtung der Aufbereitungseinrichtung, etwa einer Plasmaquelle und/oder einer Ozonquelle der Ansteuerungseinrichtung, zu erzeugen. Hierbei ist die Anregungseinrichtung ausgebildet, um unter Verwendung des Anregungssteuersignals 208 in der Anregungszone ein Plasma zu erzeugen und auf den Kunststoff zu führen, sowie durch das Plasma gebildete und/oder durch eine externe Ozonquelle zugeführtes Ozon auf den Kunststoff zu applizieren.

Fig. 3 zeigt ein Ablaufdiagramm eines Verfahrens 300 gemäß einem Ausführungsbeispiel. Das Verfahren 300 zum Reduzieren von flüchtigen Substanzen, insbesondere von Gerüchen, bei einer Kunststoffaufbereitung kann beispielsweise im Zusammenhang mit einem vorangehend anhand von Fig. 2 beschriebenen Steuergerät durchgeführt werden. Hierbei wird in einem Schritt 310 der Kunststoff in die Niederdruckzone der Aufbereitungsvorrichtung gefördert. In einem Schritt 320 wird ein Plasma angeregt und/oder Ozon appliziert, um die flüchtigen Substanzen aus dem Kunststoff zu zersetzen.

Die Schritte 310, 320 können gleichzeitig durchgeführt werden. Ferner können die Schritte 310, 320 fortlaufend durchgeführt werden.

Gemäß einem Ausführungsbeispiel werden in einem optionalen Schritt des Verfahrens 300 schichtbildende oder nicht schichtbildende Präkursoren in fester, flüssiger oder gasförmiger Form oder Hilfsgase in einem Compoundierprozess oder einem vorgelagerten Prozessschritt, etwa in einer Druckkammer, zu dem Kunststoff hinzugefügt. Im Schritt 310 erfolgt dann das Ausgasen der eingebrachten Präkursoren oder Hilfsgase in der Niederdruckzone des Compounders. Beispielsweise werden im Schritt 310 die Präkursoren oder Hilfsgase mittels elektromagnetischer Wellen, Laser, elektrischer Entladungen oder Ähnlichem zu dem Plasma angeregt.

Verbrauchte Prozessgase können in einem optionalen Verfahrensschritt durch Absaugung einfach abtransportiert werden.

Optional können weitere Hilfsstoffe in der Niederdruckzone zugegeben werden. Die Zugabe erfolgt beispielsweise im Schritt 310 oder im Schritt 320 oder in beiden Schritten.

Hilfsstoffe in Form von Präkursoren oder Hilfsgasen können im Vergleich zu Kleinstmengen von Pulvern oder feinkernigen Feststoffen einfach dosiert werden.

Eine mittels des Verfahrens 300 zusätzlich erzielte Eigenschaftsverbesserung des compoundierten Kunststoffs ermöglicht den Einsatz wirtschaftlicher Ausgangsstoffe mit ursprünglich schlechteren Materialeigenschaften wie beispielsweise Kunststoffabfällen.

## Patentansprüche

1. Verfahren (300) zum Reduzieren von flüchtigen Substanzen, insbesondere von Gerüchen, bei einer Kunststoffaufbereitung, wobei das Verfahren (300) folgende Schritte umfasst:
Fördern (310) eines Kunststoffs (104) in eine Anregungszone (108) einer Aufbereitungsvorrichtung (100); und
Anregen (320) eines Plasmas (112) und Applizieren (320) von Ozon (113) in der Anregungszone (108), um die flüchtigen Substanzen aus dem Kunststoff (104) zu zersetzen, wobei zusätzlich ein Schritt des Schmelzens des Kunststoffs (104) vor oder während des Schritts des Anregens (320) oder Applizierens (320) vorgesehen ist, und wobei bei dem Schritt des Anregens (320) des Plasmas (112) durch das Plasma (112) Ozon (113) gebildet wird, wobei
bei dem Schritt des Anregens (320) des Plasmas (112) und des Applizierens (320) des Ozons (113) das Plasma (112) und das Ozon (113) auf einer Oberfläche des Kunststoffs (104) einwirken, um die aus dem Kunststoff (104) austretenden flüchtigen Substanzen zu zersetzen.

2. Verfahren (300) gemäß Anspruch 1, bei dem ein Gas oder Gasgemisch als ein Hilfsstoff (106) zu dem Kunststoff (104) vor und/oder während des Förderns (310) und/oder während des Schmelzens hinzugefügt wird.

3. Verfahren (300) gemäß Anspruch 1 oder 2, bei dem im Schritt des Anregens (320) der Kunststoff (104) und/oder der Hilfsstoff (106) zur Plasmabildung angeregt wird.

4. Verfahren (300) gemäß einem der Ansprüche 1 bis 3, bei dem im Schritt des Applizierens (320) von Ozon (113) das Ozon (113) durch eine externe Einheit, insbesondere durch einen Ozongenerator, zugeführt wird.

5. Verfahren (300) gemäß Anspruch 1, bei dem das Plasma (112) und Ozon (113) großflächig und/oder lokal an verschiedenen Stellen auf der Oberfläche des Kunststoffs (104) angeregt und appliziert wird.

6. Aufbereitungsvorrichtung (100) zum Reduzieren von flüchtigen Substanzen, insbesondere von Gerüchen, bei einer Kunststoffaufbereitung, wobei die Aufbereitungsvorrichtung (100) folgende Merkmale aufweist:
eine Anregungszone (108);
eine Fördereinrichtung (102), die ausgebildet ist, um ein Kunststoff (104) in die Anregungszone (108) zu fördern; und
eine Anregungseinrichtung (110), die ausgebildet ist, um in der Anregungszone (108) ein Plasma (112) anzuregen und Ozon (113) zu applizieren, wobei das Plasma (112) und das Ozon (113) auf einer Oberfläche des Kunststoffs (104) einwirken, um die flüchtigen Substanzen aus dem Kunststoff (104) zu zersetzen, wobei der Anregungszone (108) ein Mittel zum Schmelzen des Kunststoffs (104) vor oder während des Anregens des Kunststoffs (104) aufweist und bei der die Anregungseinrichtung (110) eine Ozonapplikationseinheit aufweist, welche mit einer Ozonquelle, insbesondere mit einem Ozongenerator, verbunden ist.

7. Aufbereitungsvorrichtung (100) gemäß Anspruch 6, bei der die Anregungseinrichtung (110) eine Mehrzahl an Düsen (115) aufweist, mit welchen das Plasma (112) auf einer Oberfläche des Kunststoffs (104) anregbar und das Ozon (113) auf einer Oberfläche des Kunststoffs (104) applizierbar ist, wobei die Mehrzahl an Düsen (115) derart an der Anregungseinrichtung (110) angeordnet sind, dass das Plasma (112) und das Ozon (113) großflächig und/oder lokal an verschiedenen Stellen auf der Oberfläche des Kunststoffs (104) einwirkt, um die aus dem Kunststoff (104) austretenden flüchtigen Substanzen zu zersetzen.

8. Steuergerät (200) mit Einheiten (202, 206), die ausgebildet sind, um das Verfahren (300) gemäß einem der Ansprüche 1 bis 5 auf einer Aufbereitungsvorrichtung gemäß einem der Ansprüche 6 bis 7 auszuführen und/oder anzusteuern.

## Claims

1. Method (300) for reducing volatile substances, in particular odours, in the processing of a plastic, wherein the method (300) comprises the following steps:
conveying (310) a plastic (104) into an excitation zone (108) of a processing device (100); and
exciting (320) a plasma (112) and applying (320) ozone (113) in the excitation zone (108) in order to decompose the volatile substances from the plastic (104), wherein a step of melting the plastic (104) is additionally provided before or during the step of exciting (320) or applying (320), and wherein, in the step of exciting (320) the plasma (112), ozone (113) is formed by the plasma (112), wherein
in the step of exciting (320) the plasma (112) and of applying (320) the ozone (113), the plasma (112) and the ozone (113) act on a surface of the plastic (104) in order to decompose the volatile substances leaving the plastic (104).

2. Method (300) according to Claim 1, in which a gas or gas mixture is added as an auxiliary (106) to the plastic (104) before and/or during the conveying (310) and/or during the melting.

3. Method (300) according to Claim 1 or 2, in which, in the step of exciting (320), the plastic (104) and/or the auxiliary (106) is excited to form plasma.

4. Method (300) according to one of Claims 1 to 3, in which, in the step of applying (320) ozone (113), the ozone (113) is supplied by an external unit, in particular by an ozone generator.

5. Method (300) according to Claim 1, in which the plasma (112) is excited and the ozone (113) is applied over a large area and/or locally at various places on the surface of the plastic (104).

6. Processing apparatus (100) for reducing volatile substances, in particular odours, in the processing of a plastic, wherein the processing apparatus (100) has the following features:
an excitation zone (108);
a conveying device (102), which is designed to convey a plastic (104) into the excitation zone (108); and
an excitation device (110), which is designed to excite a plasma (112) in the excitation zone (108) and to apply ozone (113), wherein the plasma (112) and the ozone (113) act on a surface of the plastic (104) in order to decompose the volatile substances from the plastic (104), wherein the excitation zone (108) has a means for melting the plastic (104) before or during the exciting of the plastic (104) and in which the excitation device (110) has an ozone application unit, which is connected to an ozone source, in particular to an ozone generator.

7. Processing apparatus (100) according to Claim 6, in which the excitation device (110) has a plurality of nozzles (115), with which the plasma (112) can be excited on a surface of the plastic (104) and the ozone (113) can be applied on a surface of the plastic (104), wherein the plurality of nozzles (115) are arranged on the excitation device (110) in such a way that the plasma (112) and the ozone (113) act over a large area and/or locally at various places on the surface of the plastic (104) in order to decompose the volatile substances leaving the plastic (104).

8. Controller (200) with units (202, 206) which are designed to perform and/or to activate the method (300) according to one of Claims 1 to 5 on a processing apparatus according to one of Claims 6 to 7.

## Revendications

1. Procédé (300) de réduction de substances volatiles, en particulier d'odeurs, lors d'un traitement de matériau synthétique, le procédé (300) comprenant les étapes suivantes :
transport (310) d'un matériau synthétique (104) dans une zone d'excitation (108) d'un dispositif de traitement (100) ; et
excitation (320) d'un plasma (112) et application (320) d'ozone (113) dans la zone d'excitation (108), afin de décomposer les substances volatiles dégagées du matériau synthétique (104), une étape de fusion du matériau synthétique (104) étant prévue en plus, avant ou pendant l'étape d'excitation (320) ou d'application (320), et de l'ozone (113) étant formé par le plasma (112) lors de l'étape d'excitation (320) du plasma (112),
le plasma (112) et l'ozone (113) agissant sur une surface matériau synthétique (104) lors de l'étape d'excitation (320) du plasma (112) et de l'application (320) de l'ozone (113), afin de décomposer les substances volatiles se dégageant du matériau synthétique (104).

2. Procédé (300) selon la revendication 1, dans lequel un gaz ou un mélange gazeux est ajouté en tant qu'adjuvant (106) au matériau synthétique (104), avant et/ou pendant le transport (310) et/ou pendant la fusion.

3. Procédé (300) selon la revendication 1 ou 2, dans lequel le matériau synthétique (104) et/ou l'adjuvant (106) est/sont excité(s) pendant l'étape d'excitation (320) pour la formation du plasma.

4. Procédé (300) selon l'une des revendications 1 à 3, dans lequel l'ozone (113) est introduit par une unité externe, en particulier par un générateur d'ozone, dans l'étape d'application (320) d'ozone (113).

5. Procédé (300) selon la revendication 1, dans lequel le plasma (112) est excité et l'ozone (113) est appliqué sur une grande surface et/ou localement en différents endroits sur la surface du matériau synthétique (104).

6. Dispositif de traitement (100) pour la réduction de substances volatiles, en particulier d'odeurs, lors du traitement de matériau synthétique, le dispositif de traitement (100) présentant les caractéristiques suivantes :
une zone d'excitation (108) ;
un équipement de transport (102), qui est conçu pour transporter un matériau synthétique (104) dans la zone d'excitation (108) et
un équipement d'excitation (110), qui est conçu pour exciter, dans la zone d'excitation (108), un plasma (112) et appliquer de l'ozone (113), le plasma (112) et l'ozone (113) agissant sur une surface du matériau synthétique (104), afin de réduire les substances volatiles dégagées du matériau synthétique (104), la zone d'excitation (108) présentant un moyen pour la fusion du matériau synthétique (104) avant ou pendant l'excitation du matériau synthétique (104) et dans lequel l'équipement d'excitation (110) présente une unité d'application d'ozone qui est reliée à une source d'ozone, en particulier à un générateur d'ozone.

7. Dispositif de traitement (100) selon la revendication 6, dans lequel l'équipement d'excitation (110) présente une pluralité de buses (115) avec lesquelles le plasma (112) est excitable sur une surface du matériau synthétique (104) et l'ozone (113) est applicable sur une surface du matériau synthétique (104), la pluralité de buses (115) étant agencée au niveau de l'équipement d'excitation (110) de telle sorte que le plasma (112) et l'ozone (113) agissent sur une grande surface et/ou localement en différents endroits sur la surface du matériau synthétique (104) afin de décomposer les substances volatiles dégagées du matériau synthétique (104).

8. Appareil de commande (200) présentant des unités (202, 206) qui sont conçues pour mettre en œuvre et/ou commander le procédé (300) selon l'une des revendications 1 à 5 sur un dispositif de traitement selon l'une des revendications 6 à 7.
